(19) **Europäisches Patentamt / European Patent Office / Office européen des brevets**

(11) **EP 4 280 231 B1**

(12) **EUROPEAN PATENT SPECIFICATION**

(45) Date of publication and mention
of the grant of the patent:
**01.04.2026 Bulletin 2026/14**

(51) International Patent Classification (IPC):
**H01B 11/00** $^{(2006.01)}$ **H01B 11/08** $^{(2006.01)}$

(21) Application number: **23167271.8**

(52) Cooperative Patent Classification (CPC):
**H01B 11/00; H01B 11/08**

(22) Date of filing: **11.04.2023**

(54) **DATA TRANSMISSION CABLE**

DATENÜBERTRAGUNGSKABEL

CÂBLE DE TRANSMISSION DE DONNÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.05.2022 IT 202200010544**

(43) Date of publication of application:
**22.11.2023 Bulletin 2023/47**

(73) Proprietor: **Prysmian S.p.A.**
**20126 Milano (IT)**

(72) Inventors:
• **BROWN, Scott M.**
**Highland Heights, Kentucky, 41076 (US)**
• **PFEILER, Christian**
**90475 Nürnberg (DE)**

(74) Representative: **Praxi Intellectual Property Milano**
**Via Mario Pagano, 69/A**
**20145 Milano (IT)**

(56) References cited:
**EP-A1- 0 915 486       CN-A- 106 169 677**
**JP-A- 2003 045 240    KR-A- 20180 077 334**
**US-A- 6 010 788        US-B1- 6 194 663**
**US-B1- 6 288 340**

**Description**

BACKGROUND

Technical field

The present disclosure relates to data transmission cables, such as an example, ethernet cables.

Description of the Related Art

Known ethernet cables are designed with balanced twisted pairs (e.g. four twisted pairs) and are classified into categories based mainly on bandwidth (measured in MHz), maximum data rate (measured in megabits per second) and as screened/unscreened.

As an example, a Category 5 (Cat5) cable has a data rate of up to 100 Mbps. Cat5 cable is used for standard 10BaseT and 100BaseT (fast ethernet) networks, and can distribute data, video and telephone signals at distances up to 100 meters.

In comparison to Cat5 cable, a Cat6 cable provides greater bandwidth and data transfer rates up to 1 Gbps over 100 m. However, at shorter distances of up to 37 m, Cat6 is able to achieve 10 Gbps speeds thanks to its improved shielding and higher bandwidth. Cat6 may often include a physical separator called a "spline" between the four pairs to reduce crosstalk and foil shielding to reduce electromagnetic interference.

With a bandwidth of up to 2 GHz and a data rate of up to 40Gbs, cable of Category 8 (Cat8) is employed for switch-to-switch communications in a 25GBase T or 40GBase T network. It is observed that Cat8 cables have a maximum reach (30 m) significantly reduced with respect lower category cables.

Document US6288340 discloses an electrical conductor cable for transmitting information including a set of conductors or pairs of conductors insulated from each other and at least two metalized longitudinal flexible tapes separating the conductors or pairs and applied around each conductor or pair by virtue of twisting or torsion of the cable.

Document US10347397 relates to a cable for transmitting electrical signals comprising an outer casing made of an electrically insulating material and at least two lines arranged within the outer casing, wherein each line as at least one wire made of an electrically conductive material. The dielectrics of the wires of one line have a value for the relative permittivity of the dielectrics surrounding the respective wires differing by a quantity between 0.01 to 2.0 in comparison with the wires of a different line. This results in different propagation speeds for electrical signals on these lines with different dielectrics around the wires. The cable is a star quad cable, in which the four wires of the two lines (two wires per line) are twisted with one another in a cruciform manner.

Document US5424491 discloses a telecommunications cable having a plurality of pairs of twisted together individually insulated conductors, the twist lay length of at least some conductor pairs being different from that of others, and the insulation thickness of the conductors of at least some pairs being different from that of other pairs.

At present, the majority, if not all of the marketed ethernet cables use balanced lines (or signal pairs) each consisting of two conductors of the same type, each of which having equal impedances along their lengths and equal impedances to ground and to other circuits to reduce noise and interference as much as possible. See, for example, https://en.wikipedia.org/wiki/Balanced line and C.R. Paul, Analysis of Multiconductor Transmission Lines, 2nd Ed. IEEE Press, 2008, Chap.1.5.2.

Common mode parameters have been considered to improve the transmission parameters. See, for example, Kaden, H.: "Wirbelströme und Schirmung in der Nachrichten-technik"; Springer-Verlag, chapter E-2., 1959, and Pfeiler, C.; Molin, D.: Calculation of common mode parameters of cables for high data rate digital communications; Proceeding of the 64th IWCS; p. 505 to 508. However, the Applicant noticed that Cat8 cables typically show distortion effects of the transmission parameters that do not allow using the common mode, in addition to the differential mode, for high speed data transmission.

Document US6194663B1 describes a cabling having a plurality of metallic conductor pairs, each pair including two plastic insulated conductors twisted together. Document US6288340 discloses a cable comprising four pairs of twisted wires; each pair comprises two insulated wires, each consisting of a central conductor and an insulating sheath.

Document EP0915486 describes a data transmission cable consisting of four pairs, each of which is composed of two insulated and twisted or stranded copper conductors. Document CN106169677A discloses a shielded cable assemblies designed to transmit digital electrical signals without modulation or encoding.

SUMMARY OF THE INVENTION

The Applicant observes that in data transmission cables a further increase of data rate, with respect to the values obtainable with the known cables (e.g. Cat8 cables) but avoiding further decrease of the maximum reach, is appealing.

The Applicant has found that a data transmission cable comprising at least two pairs of insulated conductors, the insulated conductors of a pair being untwisted one another, and including a metallic screen wrapped around each insulated conductor, has increased data rate and limited crosstalk effects. Said data transmission cable allows efficiently operating in common mode in addition to balanced (a.k.a. differential) mode.

Thus, the present disclosure relates to a data transmission cable comprising:

- a first balanced untwisted cable pair including a first insulated conductor comprising a first conductor surrounded by a first insulation layer, and a second insulated conductor comprising a second conductor surrounded by a second in insulation layer;
- at least one second balanced untwisted cable pair including a third insulated conductor comprising a third conductor surrounded by a third insulation layer, and a fourth insulated conductor comprising a fourth conductor surrounded by a fourth insulation layer;

  wherein:

  the cable further comprises a metallic screen separating and at least partially surrounding each of said first, second, third and fourth insulated conductor; and

  the first balanced untwisted cable pair is configured to be unbalanced with respect to the second balanced untwisted cable pair.

In an embodiment, the first balanced untwisted cable pair is associated with a first group of structural parameters and the second balanced cable pair is associated with a second group of structural parameters different from the first group of structural parameters in at least one value.

In an embodiment, the first group of parameters includes: a first external diameter of the first and second insulated conductor; a first inner diameter of the first and second insulated conductor and a first dielectric constant of the first and second insulation layers. The second group of parameters includes: a second external diameter of the third and fourth insulated conductor; a second inner diameter of the third and fourth insulated conductor and a second dielectric constant of the third and fourth insulation layers.

The first group of parameters, the second group of parameters and the metallic screen are suitable to reduce crosstalk between the first cable pair and the at least one second cable pair.

In an embodiment, the insulated conductors of the present data transmission cable, while being untwisted each other in a pair, are stranded altogether. For example, while the first and the second insulated conductor are untwisted each other, they are stranded with the third and the fourth insulated conductor.

The data transmission cable of the present disclosure further includes an outer sheath surrounding the first pair, the at least one second pair and the metallic screen.

In an embodiment, the metallic screen may comprise at least one metallic foil. When the metallic screen comprises two or more metallic foils, these foils can be partially radially superposed.

In an embodiment, the foil/s of the metallic screen is/are made of a material selected from copper, aluminium, or alloys thereof.

In an embodiment, a further metallic screen may be present between the metallic screen and the outer sheath.

In an embodiment, the data transmission cable of the present disclosure is configured to operate according to an ethernet protocol. The data transmission cable of the present disclosure can be configured to operate according to a high data rate protocols, for example higher than 10 Gbit/s or higher than 40 Gbit/s.

The present disclosure also relates to a data transmission system comprising

- a data transmission cable comprising:

  - a first balanced untwisted cable pair including a first insulated conductor comprising a first conductor surrounded by a first insulation layer, and a second insulated conductor comprising a second conductor surrounded by a second in insulation layer;
  - at least one second balanced untwisted cable pair including a third insulated conductor comprising a third conductor surrounded by a third insulation layer, and a fourth insulated conductor comprising a fourth conductor surrounded by a fourth insulation layer;

    wherein:

    the cable further comprises a metallic screen separating and at least partially surrounding each of said first, second, third and fourth insulated conductor; and

    the first balanced cable pair is configured to be unbalanced with respect to the second balanced cable pair; and

- a communication device connected to said data transmission cable to generate and transmit along the data transmission cable data signals both in common and differential mode simultaneously.

In the present description and claims the term "insulation", "insulated" and the like, and "conductive", "conductor" and the like are meant to refer to electrically insulating and electrically conducting entities.

BRIEF DESCRIPTION OF THE DRAWINGS

Further characteristics and advantages will be more apparent from the following description of the various embodiments given as a way of an example with reference to the enclosed drawings in which:

Figure 1 schematically shows an embodiment of a data transmission cable according to the present disclosure and comprising two cable pairs;
Figure 2 schematically shows an example a data transmission system comprising a data transmission cable according to the present disclosure;
Figure 3 shows two exemplary trends of amplitude and phase of a transfer impedance between parts of the metallic screen around insulated conductors of a data transmission cable according to the present disclosure;
Figure 4 shows an exemplary behaviour of Attenuation Crosstalk Ratio Far-end (ACR-F; in abscissa) versus the frequency (in MHz; in ordinate) in a data transmission cable according to the present disclosure.

DETAILED DESCRIPTION

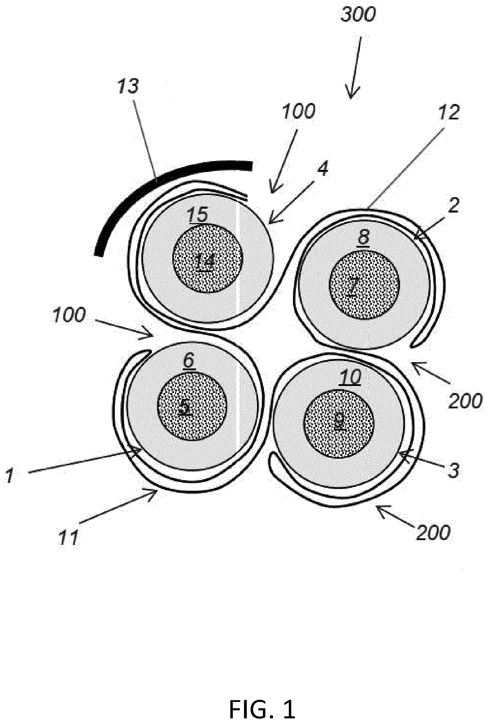

Figure 1 schematically shows an example of a data transmission cable 300 comprising a first cable pair 100 and at least a second cable pair 200. The first cable pair 100 (hereinafter also called "first pair", for the sake of brevity) has a first insulated conductor 1 and second insulated conductor 4. In an embodiment, the insulated conductors of each pairs are circumferentially adjacent, thus different from pairs of a star quad cable.

The first insulated conductor 1 comprises a first conductor 5 (e.g. a metal rod or metal stranded wires) surrounded by a first insulating layer 6. The first insulated conductor 1 is associated with a first group of parameters comprising: a first external diameter $D1$ (i.e. the diameter of the first insulated conductor 1, a first inner diameter $d_1$ (i.e. the outer diameter of the first conductor 5) and a first dielectric constant $\varepsilon_1$ (i.e. the dielectric constant of the first insulating layer 6). The second insulated conductor 4 comprises a second conductor 14 (e.g. a metal rod or metal stranded wires) surrounded by a second insulating layer 15.

The first insulated conductor 1 and the second insulated conductor 4 form a balanced untwisted pair since they have substantially identical impedances along their lengths and substantially identical impedances to ground and to other circuits. The second insulated conductor 4 of the first pair 100, has a respective group of parameters having values substantially identical to those of the first group of parameters of the first insulated conductor 1 ($D1, d1, \varepsilon_1$).

In the present description and claims the term "substantially identical" (and the symbol $\approx$ denoting this term) refers to a parameter value of one insulated conductor being the same of the respective parameter value of another insulated conductor or differing of a magnitude not greater than typical manufacturing or standard tolerances.

The second cable pair 200 (hereinafter also called "second pair") has a third insulated conductor 3 and a fourth insulated conductor 2. The third insulated conductor 3 comprises a third conductor 9 (e.g. a metal rod or metal stranded wires) surrounded by a third insulating layer 10. The third insulated conductor 3 is associated with a second group of parameters comprising: a second external diameter $D3$ (i.e. the diameter of the third insulated conductor 3, a second inner diameter $d3$ (i.e. the outer diameter of the third conductor 9) and a second dielectric constant $\varepsilon_3$ (i.e. the dielectric constant of the third insulating layer 10). The fourth insulated conductor 2 comprises a third conductor 7 (e.g. a metal rod or metal stranded wires) surrounded by a third insulating layer 8.

The third insulated conductor 3 and the fourth insulated conductor 2 form a balanced untwisted pair. The fourth insulated conductor 2, which has a respective group of parameters having the values substantially identical to those of the second group of parameters of the third insulated conductor 3 ($D3, d3, \varepsilon_3$).

The first pair 100 and the second pair 200 are unbalanced each other in that each insulated conductor 1, 4 of the first pair 100 is unbalanced with respect each insulated conductor 3, 2 of the second pair 200. Therefore, each insulated conductor 1-4 have impedances with respect to ground substantially identical to the impedances of insulated conductor 3-2, but different signal propagation speed. It is observed that the first pair 100 and the second pair 200 mutual unbalanced status allows decoupling the first pair 100 from the second pair 200 by different velocities of propagation.

The first group of parameters $D1, d1, \varepsilon_1$ associated with the first insulated conductor 1 and the second insulated conductor 4 has at least one value different from the respective value of the second group of parameters $D3, d3, \varepsilon_3$ associated with the third insulated conductor 3 and the fourth insulated conductor 2. For example, at least the first inner diameter $d_1$ of the first group has a value different from the second inner diameter $d_3$ of the second group.

Each insulated conductor of the first cable pair 100 and the second cable pair 200 is separated from the other insulated conductors by a metallic screen 11. The metallic screen 11 electromagnetically decouples each insulated conductor 1-4 from the other ones. The metallic screen 11 wraps around each insulated conductor 1-4. The metallic screen may be made of a single metallic foil or of a plurality of metallic foils of, for example, copper, aluminium or a laminate of copper/ or aluminium/polymer.

In an embodiment, the metallic screen 11 comprises a single metal foil 12 longitudinally arranged, by turnings and plies, in two layers at least partially wrapping the insulated conductors 1-4. Each of the first 1, the second 2, the third 3 and the fourth 4 insulated conductors is at least partially surrounded by the two layers of the metallic foil 12 which isolates each insulated conductor 1-4 from the others.

In another non illustrated embodiment, the metal screen can comprise two or more metal foils longitudinally arranged, by turnings and plies, in two or more layers at least partially wrapping the insulated conductors 1-4. A similar provision is illustrated, for example, in US6288340.

In an embodiment, the metal screen is made of at least one metallic foil having a thickness of 3 to 100 $\mu$m, for example from 9 to 50 $\mu$m.

While the insulated conductors forming each pair 100, 200 are not twisted one another (the first insulated conductor 1 is not twisted with the second insulated conductor 4, and the same for the third 3 and fourth 2 insulated conductors), the insulated conductors 1, 4, 3 and 2 are stranded altogether.

Data transmission cable 300 also comprises an outer sheath 13 surrounding the first pair 100, the second pair 200 and the metallic foil 12. The sheath 13 can be made of a polymeric material, for example polyethylene, the polymer material optionally being a halogen-free and flame-retardant (HFFR) one.

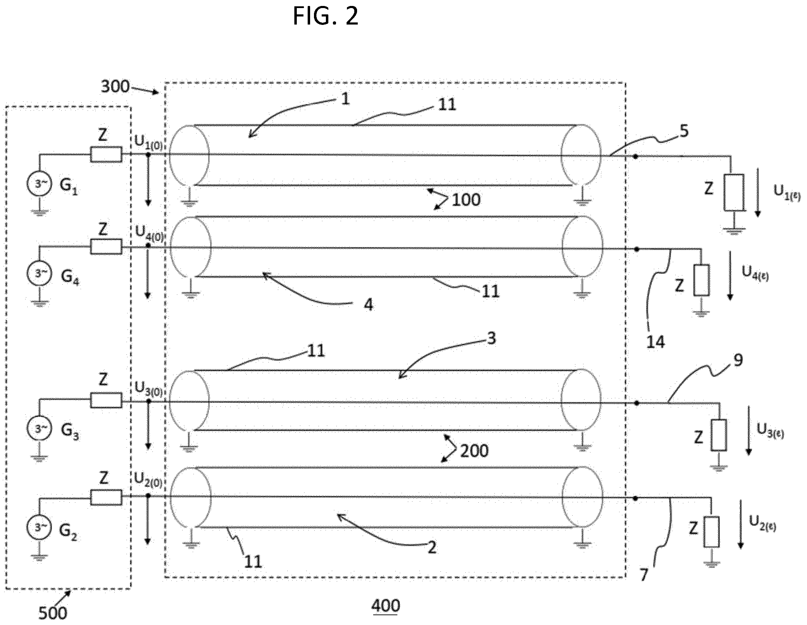

Figure 2 schematically shows an example of a data transmission system 400 including the data transmission cable 300 above described. The data transmission system 400 (hereinafter, "transmission system") is configured such that each first and second cable pair 100, 200 operates simultaneously according to a differential mode and a common mode. The construction of the insulated conductors of the pairs allows keeping the parameters of both mode under control and limiting the crosstalk between the pairs.

The transmission system 400 includes a communication device 500 connected to the data transmission cable 300 and configured to perform processing (such as an example: modulation, demodulation, packet encapsulation etc.) necessary for the transmission and the reception of data to/from the data transmission cable 300. Particularly, the transmission system 400 can operate according to the ethernet protocol.

According to an example (Figure 2), the communication device 500 includes a first signal generator G1 associated with an impedance Z which, in the present example, is similar to the nominal impedance of the screened insulated conductor 1. Signal generator G1 is connected to the screened insulated conductor 1 at the near end of the cable 300 where the location x=0. A second signal generator G4 is also associated with an impedance Z and connected to the second screened insulated conductor 4 at the near end of the cable 300.

The two screened insulated conductors 1 and 4 are working together as a pair 100 as the signal generators G1 and G4 operate in a way that both modes of the pair 100 are excited simultaneously. Both modes are used simultaneously for data transmission and the data transmission is possible in both forward and backward direction simultaneously (full duplex). The metallic screens 11 (e.g. made as described with reference to Figure 1) of the insulated conductors 1 and 4 are connected to ground.

Moreover, the communication device 500 includes, in the present example, two further signal generators G3 and G2 each associated with an impedance Z which are connected to the screened insulated conductors 3 and 2 at the near end of the cable 300. These insulated conductors are working together as pair 200. The metallic screens 11 (e.g. made as described with reference to Figure 1) of the insulated conductors 3 and 2 are connected to ground. Furthermore, the signal generators 3 and 2 run a similar data transmission scheme as described above for insulated conductors 1 and 4. In Figure 2, the above described insulating layers 6, 15 of the first cable pair 100 and the insulating layers 8, 10 of the second cable pair 200 are not shown for the sake of clarity of the drawings.

As an example, each insulated conductor 1-4 has an impedance Z of about 50 $\Omega$ in order to achieve a balanced impedance of about 100 $\Omega$ for the first cable pair 100 operating as differential pair. According to this example, the common mode impedance is of about 25 $\Omega$.

It is observed that the data transmission cable of the present disclosure can be configured to have a data rate greater than that of the ethernet cable of Category 8 without any further decrease of the maximum reach. Indeed, the first and second cable pair operating both according to the differential mode with a data rate (i.e. data transfer speed) of up to 40 Gbps, in a frequency range of up to 2 GHz, and according to the common mode with a data rate of up to 80 Gbps, in a frequency range of up to 2 GHz, may have a transmission reach be greater than 30 m also for 80 Gbps. In this way, the data transmission rate can be doubled without further decrease of the maximum transmission length.

It observed that in the data transmission cable of the present disclosure, the two insulated conductors forming a cable pair can be circumferentially adjacent as above described or, according to another embodiment, they can be radially adjacent (as an example the first insulated conductor 1 and the fourth insulated conductor 2).

With reference to the number of cable pairs, it is noticed that according to another embodiment of the data transmission cable of the present disclosure, more than two cable pairs can be employed. For example, the data transmission cable may have four cable pairs, each pair optionally differing from the first cable pair 100 or/or from the second cable pairs 200. In this case, each cable pair has a respective group of parameters ($Di, di, \varepsilon_{1i}$) different from that of another cable pairs and insulated conductors disposed circumferentially one another.

In the following paragraphs crosstalk aspects in the data transmission cable 300 of figures 1 and 2 are discussed. It is noticed that theory of crosstalk between conductors in transmission lines is described in the above cited documents Ref. 1: and Ref. 2.

Crosstalk between insulated conductors 1-4

The crosstalk between the first insulated conductor 1 of the first pair 100 with the third insulated conductor 3 of the second pair 200 is discussed hereinbelow.

Considering a voltage $U_0$ driving the first insulated conductor 1 at the beginning of the line ($x = 0$), the voltages at opposite ends ($x = 0$ and $x = l$) of the third insulated conductor 3 can be calculated according to the following equations:

$$U_3(0) = -\frac{R_k}{2Z}\frac{1-e^{-(\gamma_1+\gamma_3)l}}{\gamma_1+\gamma_3}U_0 \qquad (1)$$

$$U_3(l) = \frac{R_k}{2Z}\frac{e^{-\gamma_1 l}-e^{-\gamma_3 l}}{\gamma_3-\gamma_1}U_0 \qquad (2)$$

Where:

- Z is the impedance of the single insulated conductor (first insulated conductor 1 or third insulated conductor 3);
- $R_k$ is the effective transfer impedance between single insulated conductors;
- $\gamma_1, \gamma_3$ are the propagation constants of the insulated conductors 1 and 3, respectively.

The effective transfer impedance is introduced according to Kaden, H.: "Wirbelströme und Schirmung in der Nachrichten-technik"; Springer-Verlag, chapter L-4., 1959. Comparison of simulated and measurement data discussed in the above-mentioned Pfeiler, C., et al. shows that the use of the transfer impedance of a single insulated conductor is effective for calculating a good approximation of the effective transfer impedance.

It observed that the insulated conductors 1, 4 of the first pair 100 are configured to show similar values of the propagation constants, i.e. substantially identical to a first value $\gamma_1$, and the insulated conductors 3, 2 of the second pair 200 show similar values of the propagation constants, i.e. substantially identical to a second value $\gamma_3$ different from the first value $\gamma_1$. This choice contributes to reduce the crosstalk.

Moreover, it is noticed that the metallic foil 12 of the metal screen 11 at least partially surrounding each insulated conductor 1-4 as above described contributes to reduce the effective transfer impedance $R_k$ and so the crosstalk effect.

Crosstalk between differential modes

The crosstalk between the first cable pair 100 and the second cable pair 200 is discussed hereinbelow.

To drive in differential mode the first insulated conductor 1 and second insulated conductor 4 forming a balanced untwisted pair 100, the following respective voltages $U_1$ and $U_4$ are applied according to a differential mode:

$$U_1(0) = \frac{1}{2}U_0 \qquad (3)$$

$$U_4(0) = -\frac{1}{2}U_0 \qquad (4)$$

Also, insulated conductors 3 and 2, operating according to the differential mode, form the balanced untwisted pair 200. As the propagation constants of the first cable pair 100 are substantially identical ($\gamma_1 \approx \gamma_2$) and the propagation constants of the second cable pair 200 are substantially identical ($\gamma_3 \approx \gamma_4$), the crosstalk from the insulated conductors 1 and 4 of the first cable pair 100 to the insulated conductors 3 and 2 of the second cable pair 200 superposes in a way that $U_3 = 0$ and $U_2 = 0$. This is a positive effect for the data transmission cable 300.

Crosstalk between common modes

The crosstalk between a common mode propagating in the first pair 100 with the common mode of the second pair 200 is discussed hereinbelow.

The operation of the first pair 100 in common mode results in the following voltages:

$$U_1(0) = U_0 \quad (5)$$

$$U_4(0) = U_0 \quad (6)$$

Assuming that $\gamma_1 \approx \gamma_2$ and $\gamma_3 \approx \gamma_4$, the interference voltages at insulated conductors 3 and 2 add up as indicated in the following equations:

$$U_3(0) = U_2(0) = -\frac{R_k}{Z}\frac{1-e^{-(\gamma_1+\gamma_3)l}}{\gamma_1+\gamma_3}U_0 \qquad (7)$$

$$U_3(l) = U_2(l) = \frac{R_k}{Z}\frac{e^{-\gamma_1 l}-e^{-\gamma_3 l}}{\gamma_3-\gamma_1}U_0 \quad (8)$$

This effect is reduced choosing the propagation constants of insulated conductors 1 and 4 different from those of insulated conductors 3 and 2 to limit the common mode crosstalk.

Moreover, the metallic foil 12 at least partially surrounding each insulated conductor 1-4 allows reducing this type of crosstalk.

Design of the parameters of the insulated wires

The design parameters that may influence characteristic impedance and propagation constants of the insulated conductors 1-4 are: inner diameter $d_i$ of the i-*th* cable, external diameter $D_i$ of the *i-th* cable and the effective dielectric constant $\varepsilon_i$, of the i-*th* insulation layer (in the present example, with *i* ranging from 1 to 4).

Defining the conductivity $\kappa_i$ of the conductor material (i.e. the material of conductors 5, 7, 9 and 14) and the conductivity $\kappa_a$ of the material of the metallic screen 11, the skin depth $\delta_i$ of the conductor and the skin depth $\delta_a$ of the metallic screen 11, can be calculated by the following equations:

$$\delta_i = \frac{1+j}{\sqrt{j2\pi f \mu_0 \kappa_i}}, \quad \delta_a = \frac{1+j}{\sqrt{j2\pi f \mu_0 \kappa_a}} \qquad (9)$$

Where:

  j is the imaginary unit,
  f is the frequency of the voltage signal applied and,
  $\mu_0$ is the permeability constant.

According to Kaden, H.: "Wirbelströme und Schirmung in der Nachrichten-technik"; Springer-Verlag, chapter L-3c, 1959 the frequency dependent resistance $R_i$ of the conductor (one of the conductors 5, 7, 9 and 14) is:

$$R_i = \frac{4}{\pi d \kappa_i}\left(\frac{d}{4\delta_i} + \frac{1}{4} + \frac{6}{32}\frac{\delta_i}{d}\right) \qquad (10)$$

where *d is* the outer diameter of the conductor.

For sufficiently high frequencies (e.g. of at least 5 MHz) and using the thickness s of the metallic foil 12, the frequency dependent resistance $R_a$ of said metallic foil 12 is:

$$R_a = \frac{1}{\pi D d \kappa_i}\frac{s}{\delta_a} \qquad (11)$$

Where s is the thickness of the metallic foil portion surrounding an insulated conductor, which, in view of the metallic foil thickness, is substantially similar to the outer diameter of the insulated conductor. and
D is the outer diameter of the insulated conductor that can be used as an approximation of the diameter of the metallic layer of the screening tape that is formed around an insulated conductor. Only the metallic layer closest to the insulated conductor is to be considered.

To calculate the propagation constants, the inductance $Li$ and capacitance $C_i$ can be calculated as:

$$L_i = \frac{\mu_0}{2\pi} \ln \left( \frac{D_i}{d_i} \right) \qquad (12)$$

$$C_i = \frac{2\pi \varepsilon_{ri} \varepsilon_0}{\ln \left( \frac{D_i}{d_i} \right)} \qquad (13)$$

Where:

$\varepsilon_0$ is the permittivity constant;
$\varepsilon_{ri}$ is the relative permittivity constant of the material of the i-th insulating layer, which can be dependent on the foaming rate in case a foamed dielectric is used;
d is the outer diameter of the conductor; and
D is the outer diameter of the insulated conductor.

Using these primary parameters and assuming dielectric losses can be neglected, the secondary transmission line parameters (characteristic impedance $Z$ and propagation constant $\gamma$) can be calculated as:

$$Z = \sqrt{\frac{R_i + R_a + j2\pi f L}{j2\pi f C}} \qquad (14)$$

$$\gamma = \sqrt{(R_i + R_a + j2\pi f L) j2\pi f C} \qquad (15)$$

The parameters $d_i$, $D_i$ and $\varepsilon_i$ can be selected individually per insulated conductor 1-4. As already discussed, it can be assumed that for those insulated conductors 1-4 which form a balanced untwisted pair, these parameters are identical.

For high frequencies the characteristic impedance can be approximated as $Z = \sqrt{L/C}$. In order to achieve the same level of characteristic impedance for all 1-4 (comprising the metal foil 12 at least partially surrounding them) the capacitance of the insulated conductor i has to be set to $C_i = L_i(C_1/L_1)$ and can therefore be derived from the geometry parameters $d_i$, $D_i$ and $\varepsilon_i$.
As described in the above-mentioned Kaden, H., Chapter L.3.c, the transfer impedance $Z_T$ of each portion of metallic foil 12 surrounding one insulated conductor 1-4 (from an electrical point of view, the foil 12 can be considered individually) can be calculated from the geometry. This value of the transfer impedance $Z_T$ can be used as an approximation of the effective transfer impedance $R_k$ as per equation 1:

$$R_k = R_a \left( \frac{1}{\sin^2 \alpha} + \frac{jDd}{\delta_a^2 \tan^2 \alpha} \right) \qquad (16)$$

Where:

- $R_a$ is the DC resistance of the foil 12;
- g is the lay length of the twisting of the four conductors together (length of cable in which the twisted conductors complete one turn around the cable axis)
- $\alpha = arctan(g/\pi D)$ is the lay angle twisting of the four conductors together,
- $r_i = d_i/2$, wherein d is the diameter of the insulated conductor

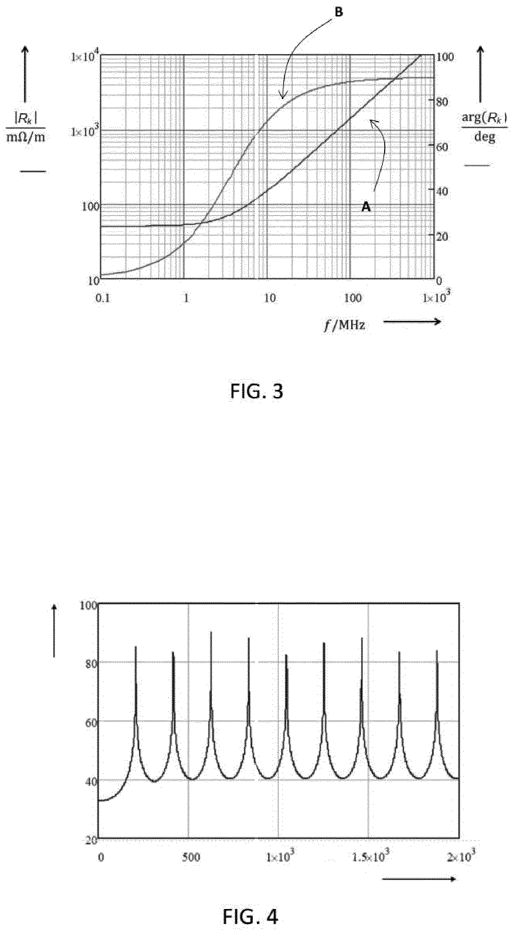

As an example, figure 3 relates to equation (16) and shows the trend A representing the amplitude $|R_k|$ of the transfer impedance $R_k$ (measured in mΩ/m) versus frequency $f$ (expressed in MHz) and the trend B representing the phase

$arg(R_T)$ of the transfer impedance $R_k$ (expressed in degrees), versus the frequency $f$.

As an example, from figure 3 the following parameters of a cylindrical screening foil 11 can be obtained:

D = 3.0 mm,
b = 15 mm,
s = 50 mm,
d = 0.04 mm
$\kappa$ = 35.106 Sm/mm$^2$ (conductivity of aluminium).

Calculation model

Using the above described equations, a model to calculate the crosstalk between the insulated conductors 1-4 surrounded by the foil 12 can be obtained. Particularly, the far-end crosstalk according to equation (8) can be evaluated. Far-end crosstalk (ACR-F) is typically expressed in dB and is derived by subtracting the insertion loss (attenuation) of the disturbing pair from the Far End Crosstalk (FEXT) this pair induces in an adjacent pair. Figure 4 shows an example for the frequency response of the calculated ACR-F. At present, a preferred value for the ACR-F (the described plateau value) of Cat8 cables is 20dB at the centre frequency of the transmitting signal.

The difference of the velocity of propagation (i.e. the skew) of the two cable pairs 100 and 200 can be related to the resulting ACR-F. Table 1 shows the respective values where the frequency independent plateau value of the ACR-F is used. According to the needs of the possible transmission scheme the necessary ACR-F can be realised by choosing the respective geometry parameters.

| Table 1: Evaluation of the calculation model for ACR-F versus skew | | | | |
|---|---|---|---|---|
| Skew [ns/100m] | 1 | 3.5 | 7 | 16 |
| ACR-F [dB] | 15 | 25 | 30 | 40 |
| $d_1$ [mm] | 0.560 | 0.560 | 0.560 | 0.560 |
| $D_1$ [mm] | 1.60 | 1.60 | 1.60 | 1.60 |
| $\varepsilon r_1$ | 1.60 | 1.60 | 1.60 | 1.60 |
| $d_2$ [mm] | 0.559 | 0.555 | 0.555 | 0.555 |
| $D_2$ [mm] | 1.60 | 1.60 | 1.61 | 1.65 |

The following ranges of parameters could be suitable for an effective transmission cable:

d: 0.40 mm to 0.67 mm
D: 1.0 mm to 1.8 mm
$\varepsilon_{ri}$:1.4 to 2.3.

The described data transmission cable and system allow increasing data rate by employing both the common and differential mode at the same time (i.e. simultaneously) for data transmission, without reducing the maximum cable distance, since crosstalk effects are limited thanks to the cable design.

**Claims**

1. Data transmission cable (300) comprising:

- a first balanced cable pair (100) including a first insulated conductor (1) comprising a first conductor (5) surrounded by a first insulation layer (6), and a second insulated conductor (4) comprising a second conductor (14) surrounded by a second in insulation layer (15);
- at least one second balanced cable pair (200) including a third insulated conductor (3) comprising a third conductor (9) surrounded by a third insulation layer (10), and a fourth insulated conductor (2) comprising a fourth conductor (7) surrounded by a fourth insulation layer (8);
wherein:
the first balanced cable pair (100) is configured to be unbalanced with respect to the second balanced cable pair (200), **characterized in that** the first balanced cable pair (100) is untwisted, the second balanced cable pair (200) is untwisted, the cable further comprises a metallic screen (11) separating and at least partially surrounding each of said first, second, third and fourth insulated conductors (1, 4, 3, 2).

2. Data transmission cable (300) according to claim 1, wherein:

   - the first balanced untwisted cable pair (100) is associated with a first group of structural parameters ($D1, d_1, \varepsilon_1$); and
   - the second balanced untwisted cable pair (200) is associated with a second group of structural parameters different from the first group of structural parameters ($D1, d_1, \varepsilon_1$) in at least one value.

3. Data transmission cable (300) according to claim 2, wherein:

   the first group of parameters includes: a first external diameter ($D1$) of the first (1) and second (4) insulated conductor; a first inner diameter ($d_1$) of the first (1) and second (4) insulated conductor and a first dielectric constant ($\varepsilon_1$) of the first (6) and second (15) insulation layers; and
   the second group of parameters includes: a second external diameter of the third (3) and fourth (2) insulated conductor; a second inner diameter of the third(3) and fourth (2) insulated conductor and a second dielectric constant of the third (10) and fourth (8) insulation layer;

4. Data transmission cable (300) according to claim 1, wherein the first insulated conductor (1), the second insulated conductor (4), the third insulated conductor (3) and the fourth insulated conductor (2) are stranded altogether.

5. Data transmission cable (300) according to claim 1, further including an outer sheath (13) surrounding the first balanced untwisted cable pair (100), the at least one second pair (200) and the metallic screen (11).

6. Data transmission cable (300) according to claim 1, wherein the metallic screen (11) comprises at least one metallic foil (12).

7. Data transmission cable (300) according to claim 6, wherein when the metallic screen (11) comprises two or more metallic foils (12), these foils (12) are partially radially superposed.

8. Data transmission cable (300) according to claim 6, wherein the metallic foil (12) is made of a material selected from copper, aluminium, or alloys thereof.

9. Data transmission cable (300) according to claim 1, wherein the data transmission cable (300) is configured to operate according to an ethernet protocol.

10. Data transmission system (400) comprising:

    - a data transmission cable (300) comprising:

      - a first balanced untwisted cable pair (100) including: a first insulated conductor (1) comprising a first conductor (5) surrounded by a first insulation layer (6), and a second insulated conductor (4) comprising: a second conductor (14) surrounded by a second insulation layer (15);
      - at least a second balanced untwisted cable pair (200) including: a third insulated conductor (3) comprising a third conductor (9) surrounded by a third insulation layer (10), and a fourth insulated conductor (2) comprising a fourth conductor (7) surrounded by a fourth insulation layer (8);

    wherein:

      the cable (300) further comprises a metallic screen (11) separating and at least partially surrounding each of said first, second, third and fourth insulated conductor (1, 4, 3, 2);
      the first balanced untwised cable pair (100) is configured to be unbalanced with respect to the second balanced cable pair (200); and
      - a communication device (500) connected to said data transmission cable (300) to generate and transmit along the data transmission cable (300) data signals both in common and differential mode simultaneously.

**Patentansprüche**

1. Datenübertragungskabel (300), umfassend:

   - ein erstes symmetrisches Kabelpaar (100) mit einem ersten isolierten Leiter (1), der einen ersten Leiter (5) umfasst, der von einer ersten Isolierschicht (6) umgeben ist, und einem zweiten isolierten Leiter (4), der einen zweiten Leiter (14) umfasst, der von einer zweiten Isolierschicht (15) umgeben ist;
   - mindestens ein zweites symmetrisches Kabelpaar (200) mit einem dritten isolierten Leiter (3), der einen dritten Leiter (9) umfasst, der von einer dritten Isolierschicht (10) umgeben ist, und einem vierten isolierten Leiter (2), der einen vierten Leiter (7) umfasst, der von einer vierten Isolierschicht (8) umgeben ist; wobei:
   Das erste symmetrische Kabelpaar (100) so konfiguriert ist, dass es in Bezug auf das zweite symmetrische Kabelpaar (200) unsymmetrisch ist, **dadurch gekennzeichnet, dass** das erste symmetrische Kabelpaar (100) unverdrillt ist, das zweite symmetrische Kabelpaar (200) unverdrillt ist, das Kabel ferner eine metallische Abschirmung (11) umfasst, die jeden der ersten, zweiten, dritten und vierten isolierten Leiter (1, 4, 3, 2) trennt und zumindest teilweise umgibt.

2. Datenübertragungskabel (300) gemäß Anspruch 1, wobei:

   - das erste symmetrische, unverdrillte Kabelpaar (100) einer ersten Gruppe von Strukturparametern (D1, d1, $\varepsilon$1) zugeordnet ist; und
   - das zweite symmetrische, unverdrillte Kabelpaar (200) einer zweiten Gruppe von Strukturparametern zugeordnet ist, die sich in mindestens einem Wert von der ersten Gruppe von Strukturparametern (D1, d1, $\varepsilon$1) unterscheidet.

3. Datenübertragungskabel (300) gemäß Anspruch 2, wobei: Die erste Gruppe von Parametern umfasst: einen ersten Außendurchmesser (D1) des ersten (1) und zweiten (4) isolierten Leiters; einen ersten Innendurchmesser ($\varepsilon$ 1) des ersten (1) und zweiten (4) isolierten Leiters und einer ersten Dielektrizitätskonstante ($\varepsilon$1) der ersten (6) und zweiten (15) Isolierschicht; und die zweite Gruppe von Parametern umfasst: einen zweiten Außendurchmesser des dritten (3) und vierten (2) isolierten Leiters; einen zweiten Innendurchmesser des dritten (3) und vierten (2) isolierten Leiters und eine zweite Dielektrizitätskonstante der dritten (10) und vierten (8) Isolierschicht.

4. Datenübertragungskabel (300) gemäß Anspruch 1, wobei der erste isolierte Leiter (1), der zweite isolierte Leiter (4), der dritte isolierte Leiter (3) und der vierte isolierte Leiter (2) insgesamt verseilt sind.

5. Datenübertragungskabel (300) nach Anspruch 1, das ferner eine Außenhülle (13) umfasst, die das erste symmetrische, unverdrillte Kabelpaar (100), das mindestens eine zweite Paar (200) und die metallische Abschirmung (11) umgibt.

6. Datenübertragungskabel (300) nach Anspruch 1, wobei die metallische Abschirmung (11) mindestens eine metallische Folie (12) umfasst.

7. Datenübertragungskabel (300) nach Anspruch 6, wobei, wenn die metallische Abschirmung (11) zwei oder mehr metallische Folien (12) umfasst, diese Folien (12) teilweise radial übereinanderliegen.

8. Datenübertragungskabel (300) nach Anspruch 6, wobei die Metallfolie (12) aus einem Material besteht, das aus Kupfer, Aluminium oder Legierungen davon ausgewählt ist.

9. Datenübertragungskabel (300) nach Anspruch 1, wobei das Datenübertragungskabel (300) so konfiguriert ist, dass es gemäß einem Ethernet-Protokoll arbeitet.

10. Datenübertragungssystem (400), umfassend:

    - ein Datenübertragungskabel (300), umfassend:
    - ein erstes symmetrisches, unverdrilltes Kabelpaar (100) mit: einem ersten isolierten Leiter (1), der einen ersten Leiter (5) umfasst, der von einer ersten Isolierschicht (6) umgeben ist, und einem zweiten isolierten Leiter (4), der umfasst: Einen zweiten Leiter (14), der von einer zweiten Isolierschicht (15) umgeben ist;
    - mindestens ein zweites symmetrisches, unverdrilltes Kabelpaar (200) mit: einem dritten isolierten Leiter (3), der einen dritten Leiter (9) umfasst, der von einer dritten Isolierschicht (10) umgeben ist, und einem vierten isolierten Leiter (2), der einen vierten Leiter (7) umfasst, der von einer vierten Isolierschicht (8) umgeben ist;
wobei:

Das Kabel (300) ferner eine metallische Abschirmung (11) umfasst, die jeden der ersten, zweiten, dritten und vierten isolierten Leiter (1, 4, 3, 2) trennt und zumindest teilweise umgibt;
das erste symmetrische, unverdrillte Kabelpaar (100) so konfiguriert ist, dass es in Bezug auf das zweite symmetrische Kabelpaar (200) unsymmetrisch ist; und

- ein Kommunikationsgerät (500) mit dem Datenübertragungskabel (300) verbunden ist, um Datensignale sowohl im gemeinsamen als auch im differentiellen Modus gleichzeitig zu erzeugen und entlang des Datenübertragungskabels (300) zu übertragen.

**Revendications**

1. Câble de transmission de données (300) comprenant :

   - une première paire de câbles équilibrés (100) comportant un premier conducteur isolé (1) comprenant un premier conducteur (5) entouré d'une première couche d'isolation (6), et un deuxième conducteur isolé (4) comprenant un deuxième conducteur (14) entouré d'une deuxième couche d'isolation (15) ;
   - au moins une deuxième paire de câbles équilibrés (200) comportant un troisième conducteur isolé (3) comprenant un troisième conducteur (9) entouré d'une troisième couche d'isolation (10), et un quatrième conducteur isolé (2) comprenant un quatrième conducteur (7) entouré d'une quatrième couche d'isolation (8) ;

   dans lequel :
   la première paire de câbles équilibrée (100) est configurée pour être déséquilibrée par rapport à la deuxième paire de câbles équilibrés (200), **caractérisée en ce que** la première paire de câbles équilibrés (100) est non torsadée, la deuxième paire de câbles équilibrés (200) est non torsadée, le câble comprend en outre un blindage métallique (11) séparant et entourant au moins partiellement chacune desdites première, deuxième, troisième et quatrième conducteurs isolés (1, 4, 3, 2).

2. Câble de transmission de données (300) selon la revendication 1, dans lequel :

   - la première paire de câbles non torsadés équilibrés (100) est associée à un premier groupe de paramètres structurels ($D1$, $d_1$, $\varepsilon_1$) ; et
   - la deuxième paire de câbles non torsadés équilibrés (200) est associée à un deuxième groupe de paramètres structurels différent du premier groupe de paramètres structurels ($D1$, $d_1$, $\varepsilon_1$) en au moins une valeur.

3. Câble de transmission de données (300) selon la revendication 2, dans lequel :

   le premier groupe de paramètres comporte : un premier diamètre extérieur ($D1$) du premier (1) et du deuxième (4) conducteur isolé ; un premier diamètre intérieur ($d_1$) du premier (1) et du deuxième (4) conducteur isolé et une première constante diélectrique ($\varepsilon_1$) des première (6) et deuxième (15) couches d'isolation ; et
   le deuxième groupe de paramètres comporte : un deuxième diamètre extérieur du troisième (3) et du quatrième (2) conducteur isolé ; un deuxième diamètre intérieur du troisième (3) et du quatrième (2) conducteur isolé et une deuxième constante diélectrique de la troisième (10) et de la quatrième (8) couche d'isolation ;

4. Câble de transmission de données (300) selon la revendication 1, dans lequel le premier conducteur isolé (1), le deuxième conducteur isolé (4), le troisième conducteur isolé (3) et le quatrième conducteur isolé (2) sont toronnés ensemble.

5. Câble de transmission de données (300) selon la revendication 1, comportant en outre une gaine extérieure (13) entourant la première paire de câbles non torsadés équilibrés (100), l'au moins une deuxième paire (200) et le blindage métallique (11).

6. Câble de transmission de données (300) selon la revendication 1, dans lequel le blindage métallique (11) comprend au moins une feuille métallique (12).

**7.** Câble de transmission de données (300) selon la revendication 6, dans lequel lorsque le blindage métallique (11) comprend deux feuilles métalliques (12) ou plus, ces feuilles (12) sont partiellement superposées radialement.

**8.** Câble de transmission de données (300) selon la revendication 6, dans lequel la feuille métallique (12) est réalisée dans un matériau choisi parmi le cuivre, l'aluminium ou leurs alliages.

**9.** Câble de transmission de données (300) selon la revendication 1, dans lequel le câble de transmission de données (300) est configuré pour fonctionner selon un protocole Ethernet.

**10.** Système de transmission de données (400) comprenant :

- un câble de transmission de données (300) comprenant :
- une première paire de câbles non torsadés équilibrés (100) comportant : un premier conducteur isolé (1) comprenant un premier conducteur (5) entouré d'une première couche d'isolation (6), et un deuxième conducteur isolé (4) comprenant : un deuxième conducteur (14) entouré d'une deuxième couche d'isolation (15) ;
- au moins une deuxième paire de câbles non torsadés équilibrés (200) comportant : un troisième conducteur isolé (3) comprenant un troisième conducteur (9) entouré d'une troisième couche d'isolation (10), et un quatrième conducteur isolé (2) comprenant un quatrième conducteur (7) entouré d'une quatrième couche d'isolation (8) ;
dans lequel :

le câble (300) comprend en outre un blindage métallique (11) séparant et entourant au moins partiellement chacun desdits premier, deuxième, troisième et quatrième conducteurs isolés (1, 4, 3, 2) ;
la première paire de câbles non torsadés équilibrés (100) est configurée pour être déséquilibrée par rapport à la deuxième paire de câbles équilibrée (200) ; et

- un dispositif de communication (500) connecté audit câble de transmission de données (300) pour générer et transmettre le long du câble de transmission de données (300) des signaux de données à la fois en mode commun et différentiel simultanément.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6288340 B
- US 10347397 B
- US 5424491 A
- US 6194663 B1
- EP 0915486 A
- CN 106169677 A

**Non-patent literature cited in the description**

- **C.R. PAUL**. Analysis of Multiconductor Transmission Lines. IEEE Press, 2008
- **KADEN, H.** Wirbelströme und Schirmung in der Nachrichten-technik. Springer-Verlag, 1959, 505-508
- **PFEILER, C.** ; **MOLIN, D.** Calculation of common mode parameters of cables for high data rate digital communications. *Proceeding of the 64th IWCS*
- Comparison of simulated and measurement data discussed in the above-mentioned. **PFEILER, C.** Wirbelströme und Schirmung in der Nachrichten-technik. Springer-Verlag, 1959
- **KADEN, H.** Wirbelströme und Schirmung in der Nachrichten-technik. Springer-Verlag, 1959